(19) Europäisches Patentamt
European Patent Office
Office européen des brevets

(11) **EP 4 488 444 A1**

(12) **EUROPEAN PATENT APPLICATION**
published in accordance with Art. 153(4) EPC

(43) Date of publication:
**08.01.2025 Bulletin 2025/02**

(21) Application number: 23759783.6

(22) Date of filing: **14.02.2023**

(51) International Patent Classification (IPC):
*D21H 11/14* (2006.01)    *B09B 3/70* (2022.01)
*C08B 16/00* (2006.01)    *C08J 11/16* (2006.01)
*D21C 5/02* (2006.01)

(52) Cooperative Patent Classification (CPC):
**B09B 3/70; B09B 5/00; C08B 16/00; C08J 11/16;
D21C 5/02; D21H 11/14; Y02W 30/64**

(86) International application number:
**PCT/JP2023/004998**

(87) International publication number:
**WO 2023/162781 (31.08.2023 Gazette 2023/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.02.2022  JP 2022030434**

(71) Applicant: **Unicharm Corporation
Shikokuchuo-shi, Ehime 799-0111 (JP)**

(72) Inventor: **KONISHI, Takayoshi
Kanonji-shi, Kagawa 769-1602 (JP)**

(74) Representative: **Dolleymores
9 Rickmansworth Road
Watford, Hertfordshire WD18 0JU (GB)**

(54) **METHOD FOR PRODUCING RECYCLED PULP FIBER**

(57)    The purpose of the present disclosure is to provide a method that can form recycled pulp fiber, wherein the method suppresses the residual presence of highly water absorbent polymer and residues thereof and suppresses changes in properties in comparison to bringing about oxidative degradation of highly water absorbent polymer using only an oxidant. This method produces recycled pulp fiber from a mixture obtained from hygiene products and comprising pulp fiber and highly water absorbent polymer, wherein the method characteristically comprises: a recycled pulp fiber formation step for forming recycled pulp fiber by supplying an oxidant and ultraviolet radiation to an aqueous solution comprising the aforesaid mixture in order to oxidatively degrade the highly water absorbent polymer and dissolve the oxidatively degraded highly water absorbent polymer in the aqueous solution; and a recycled pulp fiber recovery step for recovering the recycled pulp fiber.

**EP 4 488 444 A1**

**Description**

FIELD

The present disclosure relates to a method of producing recycled pulp fibers from a mixture including pulp fibers and a superabsorbent polymer and obtained from a sanitary product.

BACKGROUND

There are studies conducted regarding methods for recovering recycled pulp fibers from a used sanitary product.
For example, Patent Literature 1 discloses a method of recovering pulp fibers from a used sanitary product containing pulp fibers and a polymer absorbent material, the method including a step of immersing the used sanitary product in ozonated water to decompose the polymer absorbent material, a step of discharging the ozonated water, in which the decomposed polymer absorbent material is dissolved, to obtain a residue of the sanitary product from which the polymer absorbent material is removed, and a step of washing the residue of the sanitary product and decomposing the residue of the sanitary product into constituent elements by stirring the residue of the sanitary product, from which the polymer absorbent material is removed, in an aqueous solution containing a disinfectant or in water.

CITATION LIST

[PATENT LITERATURE]

Patent Literature 1: Japanese Unexamined Patent Publication No. 2014-217835

SUMMARY

[TECHNICAL PROBLEM]

As confirmed by the present inventors, it has been found that in a case where a polymer absorbent material is decomposed using ozonated water (particularly, in a case where the polymer absorbent material is inactivated using an acidic aqueous solution), it is necessary to expose pulp fibers to an oxidizing agent for a long time in order to oxidatively decompose a superabsorbent polymer, and as a result, the degree of polymerization, the amount of carboxyl groups, the alkali dissolution rate, and the like of the recycled pulp fibers to be formed are likely to be changed.
Therefore, an object of the present disclosure is to provide a method capable of forming recycled pulp fibers in which a superabsorbent polymer and residues thereof are less likely to remain and characteristics are less likely to be changed in comparison with a case where a superabsorbent polymer is oxidatively decomposed using only an oxidizing agent.

[SOLUTION TO PROBLEM]

The inventors of the present disclosure have found a method of producing recycled pulp fibers from a mixture including pulp fibers and a superabsorbent polymer and obtained from a sanitary product, the method comprising: a recycled pulp fiber forming step of forming the recycled pulp fibers by supplying an oxidizing agent and ultraviolet ray to an aqueous solution containing the mixture to oxidatively decompose the superabsorbent polymer and dissolve the oxidatively decomposed superabsorbent polymer in the aqueous solution; and a recycled pulp fiber recovery step of recovering the recycled pulp fibers.

[ADVANTAGEOUS EFFECTS OF INVENTION]

The method of producing recycled pulp fibers from a mixture including pulp fibers and a superabsorbent polymer and obtained from a sanitary product according to the present disclosure can form recycled pulp fibers in which the superabsorbent polymer and residues thereof are less likely to remain and characteristics are less likely to be changed in comparison with a case where a superabsorbent polymer is oxidatively decomposed using only an oxidizing agent.

DESCRIPTION OF EMBODIMENTS

Specifically, the present disclosure relates to the following aspects.

[Aspect 1]

A method of producing recycled pulp fibers from a mixture including pulp fibers and a superabsorbent polymer and obtained from a sanitary product, the method comprising:

a recycled pulp fiber forming step of forming the recycled pulp fibers by supplying an oxidizing agent and ultraviolet ray to an aqueous solution containing the mixture to oxidatively decompose the superabsorbent polymer and dissolve the oxidatively decomposed superabsorbent polymer in the aqueous solution; and
a recycled pulp fiber recovery step of recovering the recycled pulp fibers.

The inventors of the present application have found that while the oxidizing agent is less likely to be affected by the transparency of the aqueous solution and can oxidatively decompose and remove the superabsorbent polymer, in a case where the superabsorbent polymer is dehydrated or the like, it is necessary to expose the pulp fibers to the oxidizing agent for a long time in order to oxidatively decompose the superabsorbent polymer, and as a result, the degree of polymerization, the amount of carboxyl groups, the alkali dissolution rate, and the like of the recycled pulp fibers to be formed are likely to be changed.
Further, the inventors of the present application have found that, although the ultraviolet ray is affected by the transparency of the aqueous solution, the ultraviolet ray can oxidatively decompose and remove the superabsorbent polymer, while the characteristics of the recycled pulp fibers to be formed are less likely to be changed.
In the above method, since the superabsorbent polymer is oxidatively decomposed by using a combination of the oxidizing agent and the ultraviolet ray, the superabsorbent polymer is less likely to remain in the aqueous solution, and consequently, the recycled pulp fibers to be formed are less likely to contain the superabsorbent polymer and remnants thereof. Further, in comparison with a case where a superabsorbent polymer is oxidatively decomposed using only an oxidizing agent, there is little change in the characteristics of the recycled pulp fibers.

[Aspect 2]

The method according to Aspect 1, wherein the oxidizing agent is ozone. In the above method, since the oxidizing agent is ozone, the effect of Aspect 1 is high.

[Aspect 3]

The method according to Aspect 1 or 2, wherein

the recycled pulp fibers have predetermined characteristics according to an application, and
in the recycled pulp fiber forming step, the recycled pulp fibers having the predetermined characteristics according to the application are formed by adjusting a ratio of the ultraviolet ray and the oxidizing agent and supplying the ultraviolet ray and the oxidizing agent to the aqueous solution.

In the above method, in the recycled pulp fiber forming step, the ratio of the oxidizing agent and the ultraviolet ray is adjusted, the oxidizing agent and the ultraviolet ray is supplied to the aqueous solution of the mixture including the pulp fibers and the superabsorbent polymer, and thus recycled pulp fibers having the predetermined characteristics according to the application can be formed. Therefore, the recycled pulp fibers to be formed have suitable predetermined characteristics according to the application and are useful for the application.

[Aspect 4]

The method according to Aspect 3, wherein the application is a cellulose raw material application.
In the above method, the application is a cellulose raw material application, and recycled pulp fibers useful as a cellulose raw material can be formed.

[Aspect 5]

The method according to Aspect 4, wherein the cellulose raw material application is selected from the group consisting of cellulose nanofibers, viscose rayon, a cellulose derivative, bioethanol, biobutanol, a molding material, and a processed paper product.
In the above method, the application is selected from a predetermined group, and recycled pulp fibers useful for the application selected from the predetermined group can be formed.

[Aspect 6]

The method according to any one of Aspects 3 to 5, wherein the recycled pulp fibers having the predetermined characteristics have an amount of carboxyl groups of 0 to 0.075 mmol/g.

In the above method, recycled pulp fibers having an amount of carboxyl groups in a specific range can be formed. Therefore, the above method can produce recycled pulp fibers suitable for applications in which the generation of carboxyl groups is not preferable, for example, for a cellulose derivative raw material such as acetate, a rayon raw material, a cellophane raw material and the like.

[Aspect 7]

The method according to any one of Aspects 3 to 6, wherein the recycled pulp fibers having the predetermined characteristics have an increased amount of carboxyl groups of 0 to 0.035 mmol/g based on the pulp fibers.

In the above method, recycled pulp fibers having an amount of carboxyl groups in a specific range based on the pulp fibers can be formed. Therefore, the above method can produce recycled pulp fibers suitable for applications in which the generation of carboxyl groups is not preferable.

[Aspect 8]

The method according to any one of Aspects 3 to 7, wherein the recycled pulp fibers having the predetermined characteristics have a degree of polymerization of 300 or more.

In the above method, recycled pulp fibers having a degree of polymerization in a specific range can be formed. Therefore, the above method can produce recycled pulp fibers suitable for applications in which a decrease in the degree of polymerization is not preferable, for example, as a rayon raw material, a cellophane raw material, a cellulose nanofiber raw material, and the like.

[Aspect 9]

The method according to any one of Aspects 3 to 8, wherein the recycled pulp fibers having the predetermined characteristics have a decreased amount in a degree of polymerization of 400 or less based on the pulp fibers.

In the above method, recycled pulp fibers having a degree of polymerization in a specific range based on the pulp fibers can be formed. Therefore, the above method can produce recycled pulp fibers suitable for applications in which a decrease in the degree of polymerization is not preferable.

[Aspect 10]

The method according to any one of Aspects 3 to 9, wherein the recycled pulp fibers having the predetermined characteristics have an alkali dissolution rate of 0 to 20 mass%.

In the above method, recycled pulp fibers having an alkali dissolution rate in a specific range can be formed. Therefore, the above method can produce recycled pulp fibers suitable for applications in which a decrease in the alkali dissolution rate is not preferable, for example, for a rayon raw material, a cellophane raw material, and the like.

[Aspect 11]

The method according to any one of Aspects 1 to 10, wherein the recycled pulp fibers have an increased amount in alkali solubility of 0 to 16 mass% based on the pulp fibers.

In the above method, recycled pulp fibers having alkali solubility in a specific range based on the pulp fibers can be formed. Therefore, the above method can produce recycled pulp fibers suitable for applications in which a decrease in the alkali solubility is not preferable.

[Aspect 12]

The method according to any one of Aspects 1 to 11, wherein in the recycled pulp fiber forming step, the oxidizing agent and the ultraviolet ray are supplied to the aqueous solution in an overlapping manner.

In the above method, since the ultraviolet ray and the oxidizing agent are supplied in an overlapping manner, the time for the recycled pulp fiber forming step can be shortened, and this makes it possible to efficiently perform the above method.

[Aspect 13]

The method according to any one of Aspects 1 to 12, wherein in the recycled pulp fiber forming step, supply of the oxidizing agent to the aqueous solution is started, and then supply of the ultraviolet ray to the aqueous solution is started.

For example, in a case where a sanitary product is a used sanitary product, an aqueous solution containing a mixture containing pulp fibers and a superabsorbent polymer tends to become cloudy due to the excrement contained in the used sanitary product.

Ultraviolet ray tends to be less likely to pass through the cloudy aqueous solution and tend to be less likely to oxidatively decompose the superabsorbent polymer in the cloudy aqueous solution. In the above method, since the supply of the ultraviolet ray to the aqueous solution is started after the supply of the oxidizing agent to the aqueous solution is started, the ultraviolet ray can efficiently oxidatively decompose the superabsorbent polymer.

[Aspect 14]

The method according to any one of Aspects 1 to 13, wherein in the recycled pulp fiber forming step, supply of the oxidizing agent to the aqueous solution is stopped, and then supply of the ultraviolet ray to the aqueous solution is stopped.

In the above method, since the supply of the ultraviolet ray is stopped after the supply of the oxidizing agent is stopped, the ultraviolet ray can efficiently oxidatively decompose the superabsorbent polymer with the oxidizing agent that remains in the aqueous solution after the supply of the oxidizing agent is stopped. Further, since the recycled pulp fiber recovery step can be performed after the amount of the oxidizing agent remaining in the aqueous solution is reduced, safety is high.

[Aspect 15]

The method according to any one of Aspects 1 to 14, wherein in the recycled pulp fiber forming step, supply of the ultraviolet ray to the aqueous solution is started, and then supply of the oxidizing agent to the aqueous solution is started.

In the above method, since the oxidizing agent is supplied to the aqueous solution after the supply of the ultraviolet ray to the aqueous solution is started, for example, the superabsorbent polymer can be oxidatively decomposed without performing a step of dehydrating the superabsorbent polymer before the recycled pulp fiber forming step.

[Aspect 16]

The method according to any one of Aspects 1 to 15, wherein the ultraviolet ray includes an ultraviolet ray having a wavelength of 380 nm or less.

In the above method, since the ultraviolet ray includes those having a specific wavelength, the effect of Aspect 1 is high.

[Aspect 17]

A method of producing recycled pulp fibers having predetermined characteristics according to an application from a mixture including pulp fibers and a superabsorbent polymer and obtained from a sanitary product, the method comprising:

a recycled pulp fiber forming step of forming the recycled pulp fibers having the predetermined characteristics by supplying an oxidizing agent and ultraviolet ray to an aqueous solution containing the mixture to oxidatively decompose the superabsorbent polymer and dissolve the oxidatively decomposed superabsorbent polymer in the aqueous solution; and

a recycled pulp fiber recovery step of recovering the recycled pulp fibers.

The inventors of the present application have found that while the oxidizing agent is less likely to be affected by the transparency of the aqueous solution and can oxidatively decompose and remove the superabsorbent polymer, in a case where the superabsorbent polymer is dehydrated or the like, it is necessary to expose the pulp fibers to the oxidizing agent for a long time in order to oxidatively decompose the superabsorbent polymer, and as a result, the degree of polymerization, the amount of carboxyl groups, the alkali dissolution rate, and the like of the recycled pulp fibers to be formed are likely to be changed. While the fact may be preferable depending on the application of the recycled pulp fibers, the fact may not be preferable depending on the application.

Further, the inventors of the present application have found that, although the ultraviolet ray is affected by the transparency of the aqueous solution, the ultraviolet ray can oxidatively decompose and remove the superabsorbent polymer, while the characteristics of the recycled pulp fibers to be formed are less likely to be changed.

In the above method, in the recycled pulp fiber forming step, the ratio of the oxidizing agent and the ultraviolet ray is adjusted, the oxidizing agent and the ultraviolet ray are supplied to the aqueous solution of the mixture including the pulp fibers and the superabsorbent polymer, and thus recycled pulp fibers having a predetermined characteristics according to the application are formed. Therefore, the recycled pulp fibers to be formed are less likely to contain the superabsorbent polymer and residues thereof, have suitable predetermined characteristics according to the application, and are useful for the application.

A method of producing recycled pulp fibers from a mixture including pulp fibers and a superabsorbent polymer and obtained from a sanitary product (hereinafter, sometimes simply referred to as a "method of producing recycled pulp fibers") in the present disclosure will be described in detail below.

[Method of Producing Recycled Pulp Fibers]

A method of producing recycled pulp fibers from a mixture including pulp fibers and a superabsorbent polymer and obtained from a sanitary product according to the present disclosure includes the following steps.

- Recycled pulp fiber forming step of forming the recycled pulp fibers by supplying an oxidizing agent and ultraviolet ray to an aqueous solution containing the mixture to oxidatively decompose the superabsorbent polymer and dissolve the oxidatively decomposed superabsorbent polymer in the aqueous solution (hereinafter, sometimes referred to as "recycled pulp fiber forming step")
- Recycled pulp fiber recovery step of recovering the recycled pulp fibers (hereinafter, sometimes referred to as a "recycled pulp fiber recovery step")

The method of producing recycled pulp fibers according to the present disclosure can further include, as any step, the following step.

- Dehydration step of dehydrating the superabsorbent polymer before the recycled pulp fiber forming step (hereinafter, sometimes simply referred to as a "dehydration step")

<Recycled Pulp Fiber Forming Step>

The sanitary product is not particularly limited, as long as it contains the pulp fibers and the superabsorbent polymer, and examples thereof include a paper diaper, a urine absorbing pad, a sanitary napkin, a bed sheet, and a pet sheet. The sanitary product includes a sanitary product that is used by a user and has absorbed the excrement of the user, a sanitary product that is used by a user and has not absorbed the excrement of the user, a sanitary product that is not used and discarded, a defective product at the time of production, and the like.

The pulp fibers are not particularly limited, as long as the fibers can be used for the sanitary product, and examples thereof include a wood pulp (for example, softwood pulp or hardwood pulp), a non-wood pulp, and a crosslinked pulp.

The superabsorbent polymer includes those used in sanitary products, and examples thereof include starch-based, cellulose-based, and synthetic polymer-based superabsorbent polymers. Examples of the starch-based or cellulose-based superabsorbent polymers include starch-acrylic acid (salt) graft copolymers, saponified substance of starch-acrylonitrile copolymers, and crosslinked substance of sodium carboxymethyl cellulose. Examples of the synthetic polymer-based superabsorbent polymer include polyacrylate-based, polysulfonate-based, maleate anhydride-based, polyacrylamide-based, polyvinyl alcohol-based, polyethylene oxide-based, polyaspartate-based, polyglutamate-based, polyalginate-based, starch-based, and cellulose-based superabsorbent polymers (SAPs).

The method of obtaining the aqueous solution containing the mixture including the pulp fibers and the superabsorbent polymer from the sanitary product is not particularly limited, and for example, the aqueous solution can be obtained by cutting a used sanitary product, obtaining a mixture including pulp fibers and a superabsorbent polymer from the absorbent body, and dispersing the mixture in water. Further, for example, a used sanitary product can be cut in water to obtain an aqueous solution containing a mixture including pulp fibers and a superabsorbent polymer in the absorbent body.

In the above-described aqueous solution, the superabsorbent polymer may be dehydrated using a dehydrating agent or may not be dehydrated using a dehydrating agent. In a case where the superabsorbent polymer is not dehydrated, a dehydration step of dehydrating the superabsorbent polymer can be omitted, and the obtained recycled pulp fibers are less likely to include the superabsorbent polymer and residues thereof, as well as the dehydrating agent and residues thereof. In a case where the superabsorbent polymer is dehydrated, the moisture content of the aqueous solution can be reduced to a predetermined moisture content, and the superabsorbent polymer can be efficiently oxidatively decomposed and removed while a high concentration of the aqueous solution is maintained.

In a case where the superabsorbent polymer is dehydrated with a dehydrating agent, it is preferable that the superabsorbent polymer is dehydrated so as to have a water absorption ratio of preferably 50 times or less, more preferably 30 times or less, further preferably 25 times or less, and still further preferably 20 times or less. Further, in a case where the superabsorbent polymer is dehydrated, it is preferable that the superabsorbent polymer is dehydrated so as to have a water absorption ratio of preferably 1 time or more, more preferably 2 times or more, further preferably 3 times or more, and still further preferably 4 times or more. Therefore, the superabsorbent polymer can be efficiently oxidatively decomposed and removed while a high concentration of the aqueous solution is maintained.

It should be noted that the dehydrating agent will be described in detail below in an optional dehydration step.

In a case where the superabsorbent polymer is dehydrated with the dehydrating agent, the aqueous solution has a solid content concentration of preferably 4.0 mass% or less, more preferably 3.5 mass% or less, and further preferably 3.0 mass% or less. Further, the aqueous solution has a solid content concentration of preferably 0.1 mass% or more, more preferably 0.5 mass% or more, and further preferably 1.0 mass% or more. Therefore, the superabsorbent polymer can be efficiently oxidatively decomposed and removed while a high concentration of the aqueous solution is maintained. It should be noted that the solid content concentration is particularly preferable in a case where the aqueous solution is continuously stirred.

In a case where the superabsorbent polymer is not dehydrated with the dehydrating agent, the aqueous solution has a solid content concentration of preferably 0.1 mass% or less, more preferably 0.075 mass% or less, and further preferably 0.05 mass% or less. Further, the aqueous solution preferably has a solid content concentration of 0.01 mass% or more, more preferably 0.02 mass% or more, and further preferably 0.03 mass% or more. Therefore, the superabsorbent polymer can be efficiently oxidatively decomposed and removed. It should be noted that the solid content concentration is particularly preferable in a case where the aqueous solution is continuously stirred.

In the present specification, the solid content concentration is calculated by subtracting the moisture content from 100.

The moisture content is measured using an infrared moisture meter FD-720, manufactured by Kett Electric Laboratory Co. Ltd. Specifically, approximately 5 g of a sample is placed on a sample dish of FD-720, a set temperature is set to 150°C, an automatic stop mode is selected, and the moisture content of the sample is measured.

The oxidizing agent in the recycled pulp fiber forming step is not particularly limited as long as the oxidizing agent can oxidatively decompose the superabsorbent polymer. Examples thereof include ozone, hydrogen peroxide, chlorine dioxide, peracetic acid, and sodium hypochlorite, and ozone is preferable.

It is preferable that the ozone is supplied (for example, blown) to the aqueous solution as an ozone-containing gas, and it is preferable that the ozone-containing gas is supplied (for example, blown) to the aqueous solution as a small bubble (for example, microbubble or nanobubble).

The ozone-containing gas is supplied to the aqueous solution in a manner such that a CT value, which is the product of the concentration of ozone in the ozone-containing gas and the treatment time, is more than 600 ppm min, preferably 800 ppm min or more, more preferably 900 ppm min or more, even more preferably 1,000 ppm·min or more, and still even more preferably 1,200 ppm·min or more. In addition, the ozone-containing gas is supplied to the aqueous solution in a manner such that the CT value, which is the product of the concentration of ozone in the ozone-containing gas and the treatment time, is preferably 12,000 ppm·min or less, more preferably 8,000 ppm·min or less, and even more preferably 6,000 ppm·min or less. Therefore, the characteristics of the recycled pulp fibers are easily set within a predetermined range while the superabsorbent polymer is oxidatively decomposed.

The concentration of ozone in the ozone-containing gas is preferably 30 to 200 ppm ($g/m^3$), more preferably 80 to 200 ppm ($g/m^3$), and even more preferably 100 to 200 ppm ($g/m^3$). Therefore, the characteristics of the recycled pulp fibers are easily set within a predetermined range while the superabsorbent polymer is oxidatively decomposed.

It should be noted that the concentration of ozone in the ozone-containing gas can be measured with, for example, an ultraviolet absorption type ozone concentration meter (for example, manufactured by EcoDesign, Inc.: ozone monitor OZM-5000G).

It should be noted that the concentration of ozone in the aqueous solution is preferably 1 to 50 ppm ($g/m^3$), more preferably 2 to 40 ppm ($g/m^3$), and even more preferably 3 to 30 ppm ($g/m^3$).

The concentration of ozone in the aqueous solution is measured by the following method.

(1) 85 mL of an aqueous solution in which ozone is dissolved is placed in a 100 mL measuring cylinder containing approximately 0.15 g of potassium iodide and 5 mL of a 10 mass% citric acid solution and reacted.
(2) The aqueous solution after the reaction is moved to a 200 mL Erlenmeyer flask, a starch solution is added into the Erlenmeyer flask to color the aqueous solution in purple, then, the aqueous solution is titrated with 0.01 mol/L sodium thiosulfate under stirring until the aqueous solution turns colorless, and the addition amount: a (mL) is recorded.
(3) The concentration of ozone in the aqueous solution is calculated using the following equation. The concentration of ozone in the aqueous solution (mass ppm) is calculated by the following equation:

concentration of ozone in the aqueous solution (mass ppm)

$$= a\,(mL) \times 0.24 \times 0.85\,(mL).$$

The ultraviolet ray in the recycled pulp fiber forming step preferably includes an ultraviolet ray having a wavelength of 380 nm or less, more preferably 290 nm or less, even more preferably 260 nm or less, and still even more preferably 200 nm or less. Further, the ultraviolet ray includes an ultraviolet ray having preferably a wavelength of 100 nm or more, more preferably a wavelength of 150 nm or more, and further preferably a wavelength of 160 nm or more. Therefore, the superabsorbent polymer can be oxidatively decomposed by ultraviolet ray with high energy efficiency and a change in the characteristics of the recycled pulp fibers can be suppressed.

Examples of the source of the ultraviolet ray include a low pressure mercury lamp, a high pressure mercury lamp, and a deep ultraviolet LED. As the trade name for the above-mentioned sources of ultraviolet ray, for example, there is provided a deep ultraviolet ray generator manufactured by Nikkiso Co., Ltd., a UV-LED irradiating flow water sterilization module (PAQ-15ESET, treatment capacity: 8 liters per minute)

The ultraviolet ray can be irradiated onto the aqueous solution after the apparatus that emits the ultraviolet ray, for example, is disposed in the aqueous solution or spaced apart from the the aqueous solution.

The application of the recycled pulp fibers is not particularly limited, and examples thereof include a pulp fiber application in which the pulp fibers are used as they are (for example, the above-described sanitary product) and a processing application (for example, a cellulose raw material application).

Examples of the cellulose raw material application include cellulose nanofibers, viscose rayon, cellulose derivatives, bioethanol, biobutanol, molding materials, and processed paper products.

The oxidizing agent and the ultraviolet ray can be supplied to the aqueous solution according to the application of the recycled pulp fibers.

The oxidizing agent tends to easily decrease the degree of polymerization of the recycled pulp fibers, tends to easily increase the amount of carboxyl groups, and tends to easily increase the alkali dissolution rate. On the other hand, the ultraviolet ray tends to have a small difference in characteristics between the pulp fibers before the recycled pulp fiber forming step and the recycled pulp fibers after the recycled pulp fiber forming step, for example, a small change in degree of polymerization, a small change in amount of carboxyl groups, and a small change in alkali dissolution rate.

Therefore, when the superabsorbent polymer is oxidatively decomposed, changing the ratio of the oxidizing agent to the ultraviolet ray makes it possible to form appropriately recycled pulp fibers according to the application.

Examples of the application in which the ratio of the oxidizing agent should be relatively increased include processing applications (for example, a cellulose raw material application).

Examples of the application in which the ratio of the ultraviolet ray should be relatively increased include pulp fiber applications used as recycled pulp fibers (for example, the above-described sanitary product).

In the recycled pulp fiber forming step, the oxidizing agent and the ultraviolet ray can be supplied to the aqueous solution in an overlapping manner (hereinafter, sometimes referred to as "overlapping supply"), and the oxidizing agent and the ultraviolet ray can be supplied to the aqueous solution without overlapping (hereinafter, sometimes referred to as "non-overlapping supply").

Since the overlapping supply makes it possible to shorten the time required for the recycled pulp fiber forming step, the above-described method can be efficiently performed.

By the non-overlapping supply, for example, the recycled pulp fiber forming step can be performed while checking the state of the pulp fibers (recycled pulp fibers) or confirming the characteristics of the recycled pulp fibers.

In the overlapping supply and the non-overlapping supply, the supply of the oxidizing agent can be started, and then the supply of ultraviolet ray can be started. Therefore, in a case where the sanitary product is a used sanitary product, the ultraviolet ray can efficiently oxidatively decompose the superabsorbent polymer.

In addition, in the overlapping supply and the non-overlapping supply, the supply of the ultraviolet ray can be started and then the supply of the oxidizing agent can be started. Therefore, for example, the superabsorbent polymer can be oxidatively decomposed without performing a step of dehydrating the superabsorbent polymer before the recycled pulp fiber forming step.

In the overlapping supply and the non-overlapping supply, the supply of the oxidizing agent can be stopped, and then the supply of the ultraviolet ray can be stopped. Therefore, the superabsorbent polymer can be efficiently oxidatively decomposed by the oxidizing agent that remains in the aqueous solution. Further, since the recycled pulp fiber recovery step can be performed after the amount of the oxidizing agent remaining in the aqueous solution is reduced, safety is high.

In addition, in the overlapping supply and the non-overlapping supply, the supply of the ultraviolet ray can be stopped and then the supply of the oxidizing agent can be stopped. Therefore, for example, after the supply of the ultraviolet ray is stopped, the state of the pulp fibers (recycled pulp fibers) can be visually checked and the supply of the oxidizing agent can be stopped.

In the recycled pulp fiber forming step, the recycled pulp fibers can be formed so as to have a carboxyl group amount according to the application. The recycled pulp fibers preferably have an amount of carboxyl groups in a range of 0 to 0.075 mmol/g, more preferably 0.010 to 0.070 mmol/g, even more preferably 0.010 to 0.065 mmol/g, and still even more preferably 0.010 to 0.060 mmol/g. Therefore, recycled pulp fibers suitable for applications in which the generation of carboxyl groups is not preferable, for example, as a cellulose derivative raw material such as acetate, a rayon raw material, a cellophane raw material and the like, can be produced.

The recycled pulp fibers preferably have an increased amount of carboxyl groups of 0 to 0.035 mmol/g, more preferably 0.010 to 0.030 mmol/g, even more preferably 0.010 to 0.025 mmol/g, and still even more preferably 0.010 to 0.020 mmol/g based on the pulp fibers before the recycled pulp fiber forming step. Therefore, recycled pulp fibers suitable for applications in which the generation of carboxyl groups is not preferable can be produced.

It should be noted that in the present specification, the amount of carboxyl groups (C mmol/g) of the pulp fibers and the recycled pulp fibers (hereinafter, sometimes simply referred to as "pulp fibers") is measured as follows.

(1) Approximately 0.4 g of the pulp fibers are added into a container to which 170 mL of deionized water is added, and the pulp fibers are dispersed in the deionized water.
(2) 10 mL of 0.01M NaCl is added to the container.
(3) 0.1M HCl is added to the container, and the pH is adjusted to 2.8.
(4) 0.05M NaOH is added to the container at a rate of 0.1 mL/min to 0.2 mL/min until the pH becomes 11, and the electrical conductivity of the contents in the container is monitored.
(5) The addition amount of 0.05M NaOH is plotted along the X-axis, the electrical conductivity is plotted along the Y-axis, and an addition amount of 0.05M NaOH (V mL) at a point where the electrical conductivity becomes constant is obtained.
(6) The pulp fibers are recovered by filtration and the absolute dry mass thereof ($m_1$ g) is measured.
(7) The amounts of carboxyl groups of the pulp fibers (C mmol/g) is calculated by the following equation:

$$C\ (mmol/g) = (V \times 0.05/1000)/m_1.$$

It should be noted that the pH is measured using a pHashion pH meter, C-62 manufactured by As One Corporation. In addition, the electrical conductivity is measured using a portable electrical conductivity meter (CM-31P type) manufactured by DKK-TOA Corporation.

In the recycled pulp fiber forming step, the recycled pulp fibers can be formed so as to have a degree of polymerization according to the application. The recycled pulp fibers have a degree of polymerization of preferably 300 or more, more preferably 350 or more, further preferably 400 or more, still further preferably 450 or more, and yet still further preferably 500 or more. Therefore, recycled pulp fibers suitable for the application in which a decrease in the degree of polymerization is not preferable, for example, as a rayon raw material, a cellophane raw material, a cellulose nanofiber raw material, and the like, can be produced.

The recycled pulp fibers have a decreased amount in a degree of polymerization of preferably 400 or less, more preferably 300 or less, even preferably 200 or less, and still even preferably 150 or less based on the pulp fibers before the recycled pulp fiber forming step. Therefore, recycled pulp fibers suitable for applications in which a decrease in the degree of polymerization is not preferable can be produced.

It should be noted that, in the present specification, the degree of polymerization: DP of the pulp fibers and the recycled pulp fibers (hereinafter, sometimes simply referred to as "pulp fibers") is measured as follows.

(1) The viscosity ratio $\eta_r$ ($= \eta/\eta_0$) of the pulp fibers is measured according to "6.4.1 Viscosity ratio" of "Cellulose in dilute solutions - Determination of limiting viscosity number - Method in cupri-ethylene-diamine (CED) solution" specified in JIS 8215: 1998.
(2) The degree of polymerization: DP of the pulp fibers is calculated using the following equation. Specific viscosity:

$$\eta_{sp} = \eta_r - 1$$

Intrinsic viscosity:

$$[\eta] = \eta_{sp}/(100 \times c(1 + 0.28\eta_{sp}))$$

Degree of polymerization:

$$DP = 175 \times [\eta]$$

It should be noted that the above-described equation is based on the description on page 101 of Wood Science Experiment Manual (edited by the Japan Wood Research Society, Buneido Publishing Co., Ltd., 2000), and c means the cellulose concentration (g/mL).

In the recycled pulp fiber forming step, the recycled pulp fibers can be formed so as to have an alkali dissolution rate according to the application. The recycled pulp fibers have an alkali dissolution rate of preferably 0 to 20 mass%, more preferably 1 to 17 mass%, even more preferably 1 to 14 mass%, and still even more preferably 1 to 12 mass%. Therefore, recycled pulp fibers suitable for applications in which a decrease in the alkali dissolution rate is not preferable, for example, for a rayon raw material, a cellophane raw material, and the like, can be produced.

The recycled pulp fibers have an increased amount in alkali solubility of preferably 0 to 16 mass%, more preferably 1 to 13 mass%, even more preferably 1 to 10 mass%, and still even more preferably 1 to 7 mass% based on the pulp fibers before the recycled pulp fiber forming step. Therefore, recycled pulp fibers suitable for applications in which a decrease in the alkali solubility rate is not preferable can be produced.

It should be noted that, in the present specification, the alkali dissolution rate of the pulp fibers and the recycled pulp fibers (hereinafter, sometimes simply referred to as "pulp fibers") is measured as follows.

(1) Pulp fibers (approximately 1.0 g) whose mass ($m_2$ g) has been measured are immersed in 50 mL of a 5 M sodium hydroxide aqueous solution, and the resultant is left for 1 hour.
(2) After the sodium hydroxide aqueous solution is separated into a supernatant liquid and a precipitate with a centrifugal separator, the precipitate is obtained by filtration, neutralized and then dried at 70°C.
(3) The precipitate is completely dried and the absolute dry mass thereof: $m_3$ (g) is measured.
(4) The alkali dissolution rate (S mass%) is calculated by the following equation:

$$S \ (mass\%) = 100 \times (m_2 - m_3)/m_2.$$

<Recycled Pulp Fiber Recovery Step>

In the recycled pulp fiber recovery step, the recycled pulp fibers are recovered.

In the recycled pulp fiber recovery step, the recycled pulp fibers can be recovered from, for example, the aqueous solution using, for example, a screen having plural openings.

<Dehydration Step>

The production method according to the present disclosure can further include, as any step, a dehydration step of dehydrating the superabsorbent polymer before the recycled pulp fiber forming step. Therefore, the amount of the excrement contained in the superabsorbent polymer can be reduced, the viscosity of the superabsorbent polymer and consequently the viscosity of the aqueous solution containing the mixture including the pulp fibers and the superabsorbent polymer can be decreased, and the recycled pulp fiber forming step can be performed in a state where the moisture content of the aqueous solution is low (in a state where the solid content is high).

The dehydration step can be performed, for example, by adding a dehydrating agent to the aqueous solution containing the mixture including the pulp fibers and the superabsorbent polymer, immersing the pulp fibers and the superabsorbent polymer (or the sanitary product itself) in an aqueous solution containing a dehydrating agent, or the like.

Examples of the dehydrating agent include acids (for example, inorganic acids and organic acids), lime, calcium chloride, magnesium sulfate, magnesium chloride, aluminum sulfate, aluminum chloride, and the like. The above acid is preferable since the acid is less likely to leave an ash content in the recycled pulp fibers. In a case where the acid is used as the dehydrating agent, the pH of the aqueous solution is preferably 2.5 or less and more preferably 1.3 to 2.4. Accordingly, this makes it possible to sufficiently decrease the water absorption capability of the superabsorbent polymer, and there is less risk of corrosion of the equipment, which makes it less likely to require a large amount of alkaline chemicals for a neutralization treatment during the waste water treatment.

Examples of the inorganic acid include a sulfuric acid, a hydrochloric acid, and a nitric acid, and the sulfuric acid is preferable from a viewpoint of not containing chlorine and cost. Examples of the organic acid include a citric acid, a tartaric acid, a glycolic acid, a malic acid, a succinic acid, an acetic acid, and an ascorbic acid, and an acid capable of forming a complex with a metal ion contained in excrement, for example, a hydroxycarbonate-based organic acid such as a citric acid, a tartaric acid, and a gluconic acid are particularly preferable. It should be noted that examples of metal ions contained in excrement include calcium ions. This is because the metal ions in the excrement can be trapped and removed by a chelating effect of the acid capable of forming a complex with the metal ions contained in the excrement. In addition, the citric acid can be expected to have a high dirt component removing effect due to cleaning effect thereof.

In the dehydration step, the superabsorbent polymer is dehydrated so as to have a water absorption ratio of preferably 50 times or less, more preferably 30 times or less, further preferably 25 times or less, and still further preferably 20 times or less, and a water absorption ratio of preferably 1 time or more, more preferably 2 times or more, further preferably 3 times or more, and still further preferably 4 times or more. In such a case, the viscosity of the aqueous solution can be maintained in a predetermined range and the superabsorbent polymer can be efficiently oxidatively decomposed.

The water absorption ratio is measured as follows.

(1) The superabsorbent polymer is suspended in mesh bag for 5 minutes to remove moisture adhering to their surfaces, and a mass before drying ($m_4$ g) is measured.
(2) The superabsorbent polymer is dried at 120°C for 10 minutes, and a mass after drying ($m_5$ g) is measured.
(3) The water absorption ratio (g/g) is calculated by the following equation:

$$\text{water absorption ratio (g/g)} = 100 \times m_4/m_5.$$

It should be noted that the desired dehydration step can be performed simultaneously with the recycled pulp fiber forming step. Therefore, the method according to the present disclosure can be efficiently performed.

Examples

Hereinafter, the present disclosure will be described with reference to examples, but the present disclosure is not limited to these examples.

[Reference Example 1]

A mixture of 1.0 g of pulp fibers (softwood pulp fibers) and 0.5 g of a superabsorbent polymer (AQUAKEEP (registered trademark), SA60S, manufactured by Sumitomo Seika Chemicals Co., Ltd.) was placed in a mesh bag (N-No. 250HD, 25 cm square, manufactured by NBC Meshtec Inc.), the mixture was immersed in 80 mL of physiological saline together with the mesh bag for 15 minutes, and the superabsorbent polymer (SAP) was caused to absorb the physiological saline. Next, the mixture was immersed in a sulfuric acid aqueous solution having a pH of 2.0, containing sulfuric acid as a dehydrating agent, for 15 minutes, to form mixture No. 1 in which the superabsorbent polymer was dehydrated.

It should be noted that the pulp fibers and the superabsorbent polymer placed in the mesh bag were dried at 120°C for 10 minutes.

Mixture No. 1 in the mesh bag was put into a photochemical reactor (GT500, container capacity: 500 mL), manufactured by GLOBAL TOP CHEMICAL, in which a low pressure mercury lamp (UVL20PH-6, light emitting tube power: 0.05 W/cm$^2$, manufactured by SEN LIGHTS Co., Ltd.) was set, and dispersed aqueous solution No. 1 (600 mL) of the mixture of the pulp fibers and the superabsorbent polymer having a solid content concentration of 0.25 mass% was formed using deionized water. Dispersed aqueous solution No. 1 was continuously stirred with a stirrer. It should be noted that the container capacity of GT500 means the minimum capacity of the contents.

From a low pressure mercury lamp, dispersed aqueous solution No. 1 was irradiated with ultraviolet ray for 30 minutes, and the superabsorbent polymer was oxidatively decomposed. The contents of the photochemical reactor were then filtered, and the residue was washed with deionized water.

The residue washed with deionized water was dried at 120°C for 10 minutes, and the dry mass of the dried residue ($m_6$ g) was measured.

Residual ratio of residue (R mass%) was calculated by the following equation:

$$R \text{ (mass\%)} = 100 \times m_6/1.5.$$

The results are indicated in Table 1.

[Reference Example 2]

The superabsorbent polymer was oxidatively decomposed in the same manner as in Reference Example 1, except that the superabsorbent polymer was not dehydrated using the dehydrating agent. The residual ratio of the residue is shown in Table 1.

[Reference Example 3]

The residual ratio of the residue was measured in the same manner as in Reference Example 1, except that only 1.0 g of the pulp fibers (not containing 0.5 g of the superabsorbent polymer) were placed in the mesh bag. The results are indicated in Table 1.

[Reference Example 4]

The residual ratio of the residue was measured in the same manner as in Reference Example 1, except that only 0.5 g of the superabsorbent polymer (not containing 1.0 g of the pulp fibers) were placed in the mesh bag. The results are indicated in Table 1.

[Reference Example 5]

Mixture No. 1 was formed in the same manner as in Reference Example 1.
Mixture No. 1 in the mesh bag and deionized water were put into a 2 L-volume ozone gas exposure tank to form a dispersed aqueous solution No. 1 (600 mL) of the pulp fibers and the superabsorbent polymer having a solid content concentration of 0.25 mass%. An ozone-containing gas (a gas other than ozone is dry air) adjusted so that the ozone concentration was 50 g/m$^3$ and the flow rate was 1 L/min was blown from an ozone generator (ozone gas exposure tester: ED-OWX-2, manufactured by EcoDesign, Inc.) into the dispersed aqueous solution No. 1 in the ozone gas exposure tank for 30 minutes to oxidatively decompose the superabsorbent polymer. The residual ratio of the residue is shown in Table 1.

[Reference Example 6]

The superabsorbent polymer was oxidatively decomposed in the same manner as in Reference Example 5, except that the superabsorbent polymer was not dehydrated using the dehydrating agent. The residual ratio of the residue is shown in Table 1.

[Reference Example 7]

The residual ratio of the residue was measured in the same manner as in Reference Example 5, except that only 1.0 g of the pulp fibers (not containing 0.5 g of the superabsorbent polymer) were placed in the mesh bag. The results are indicated in Table 1.

[Reference Example 8]

The residual ratio of the residue was measured in the same manner as in Reference Example 5, except that only 0.5 g of the superabsorbent polymer (not containing 1.0 g of the pulp fibers) was placed in the mesh bag. The results are indicated in Table 1.

[Table 1]

Table 1

| Example No. | Reference Example 1 | Reference Example 2 | Reference Example 3 | Reference Example 4 |
|---|---|---|---|---|
| Contents | Pulp + SAP | Pulp + SAP | Pulp | SAP |
| Decomposition | UV | UV | UV | UV |
| Dehydrating agent | Used | Not used | Used | Used |
| Residual ratio/mass% | 66.7 | 66.7 | 100.0 | 00 |

| Example No. | Reference Example 5 | Reference Example 6 | Reference Example 7 | Reference Example 8 |
|---|---|---|---|---|
| Contents | Pulp + SAP | Pulp + SAP | Pulp | SAP |
| Decomposition | Ozone | Ozone | Ozone | Ozone |

(continued)

| Example No. | Reference Example 5 | Reference Example 6 | Reference Example 7 | Reference Example 8 |
|---|---|---|---|---|
| Dehydrating agent | Used | Not used | Used | Used |
| Residual ratio/mass% | 68.1 | 67.3 | 100.0 | 4.3 |

From Reference Examples 1 to 4, it can be seen that in a case of using UV, all of the superabsorbent polymers are oxidatively decomposed and all of the pulp fibers remain.

On the other hand, from Reference Examples 7 and 8, it can be seen that in a case of using ozone, all of the superabsorbent polymers are not oxidatively decomposed, a part of the superabsorbent polymers remains, and therefore the residual ratio of the residue is high in Reference Examples 5 and 6.

[Reference Example 9]

The pulp fibers (softwood pulp fibers) were dispersed in deionized water to form dispersed aqueous solution No. 2 (600 mL) including 0.25 mass% of the pulp fibers. Dispersed aqueous solution No. 2 was put into a photochemical reactor (GT500, container capacity: 500 mL), manufactured by GLOBAL TOP CHEMICAL, in which a low pressure mercury lamp (UVL20PH-6, light emitting tube power: 0.05 W/cm$^2$, manufactured by SEN LIGHTS Co., Ltd.) was set, and dispersed aqueous solution No. 2 was continuously stirred with a stirrer.

Dispersed aqueous solution No. 2 was irradiated with ultraviolet ray from the low pressure mercury lamp for a predetermined period of time, and the amount of carboxyl groups, the degree of polymerization, and the alkali dissolution rate were measured during the predetermined period of time. The results are shown in Tables 2, 3 and 4.

[Reference Example 10]

The amount of carboxyl groups, the degree of polymerization, and the alkali dissolution rate were measured for a predetermined period of time in the same manner as in Reference Example 9, except that the low pressure mercury lamp was changed to a high pressure mercury lamp (HL100GL-1, light emitting tube power: 8 W/cm$^2$, manufactured by SEN LIGHTS Co., Ltd.). The results are shown in Tables 2, 3 and 4.

[Reference Example 11]

The pulp fibers (softwood pulp fibers) and deionized water were put into a 2 L-volume ozone gas exposure tank to form dispersed aqueous solution No. 3 (600 mL) of the pulp fibers having a solid content concentration of 0.25 mass%. An ozone-containing gas (a gas other than ozone is dry air) adjusted so that the ozone concentration was 50 g/m$^3$ and the flow rate was 1 L/min was blown from an ozone generator (ozone gas exposure tester: ED-OWX-2, manufactured by EcoDesign, Inc.) into dispersed aqueous solution No. 3 in the ozone gas exposure tank for 30 minutes. The ozone concentration of dispersed aqueous solution No. 3 was approximately 6 ppm. The amount of carboxyl groups, the degree of polymerization, and the alkali dissolution rate during a predetermined period of time were monitored. The results are shown in Tables 2, 3 and 4.

[Table 2]

Table 2

| | | Amount of carboxyl groups (mmol/g) | | |
|---|---|---|---|---|
| Example No. | | Reference Example 9 | Reference Example 10 | Reference Example 11 |
| Treatment | | Low pressure mercury lamp | High pressure mercury lamp | Ozone |
| Time/min | 0 | 0.038 | 0.038 | 0.038 |
| | 30 | 0.065 | 0.053 | 0.079 |
| | 60 | 0.078 | 0.053 | 0.105 |
| | 90 | 0.075 | 0.054 | 0.111 |
| | 120 | 0.081 | 0.054 | 0.122 |

[Table 3]

Table 3

| | | Degree of polymerization | | |
|---|---|---|---|---|
| Example No. | | Reference Example 9 | Reference Example 10 | Reference Example 11 |
| Treatment | | Low pressure mercury lamp | High pressure mercury lamp | Ozone |
| Time/min | 0 | 668 | 668 | 668 |
| | 30 | 425 | 547 | 255 |
| | 60 | 457 | 565 | 211 |
| | 90 | 429 | 569 | 194 |
| | 120 | 448 | 527 | 115 |

[Table 4]

Table 4

| | | Alkali dissolution rate/mass% | | |
|---|---|---|---|---|
| Example No. | | Reference Example 9 | Reference Example 10 | Reference Example 11 |
| Treatment | | Low pressure mercury lamp | High pressure mercury lamp | Ozone |
| Time/min | 0 | 5.0 | 5.0 | 5.0 |
| | 30 | 6.6 | 6.0 | 22.7 |
| | 60 | 6.2 | 100 | 25.3 |
| | 90 | 7.0 | 9.0 | 27.0 |
| | 120 | 12.6 | 11.0 | 30.0 |

From Table 2, it can be seen that in a case where the pulp fibers were irradiated with ultraviolet ray from the low pressure mercury lamp or the high pressure mercury lamp, the amount of carboxyl groups in the pulp fibers is less likely to increase compared with a case where the pulp fibers were exposed to ozone, that is, the pulp fibers are less likely to be oxidized.

Further, from Table 3, it can be seen that in a case where the pulp fibers were irradiated with ultraviolet ray from the low pressure mercury lamp or the high pressure mercury lamp, the degree of polymerization of the pulp fibers are less likely to be decreased compared with a case where the pulp fibers were exposed to ozone.

Further, from Table 4, it can be seen that in a case where the pulp fibers were irradiated with ultraviolet ray from the low pressure mercury lamp or the high pressure mercury lamp, the alkali dissolution rate is less likely to increase compared with a case where the pulp fibers were exposed to ozone. It should be noted that, in the pulp fibers of Reference Example 11, the absolutely dry matter of the precipitate was colored.

When Tables 2 to 4 and 1 are combined, it can be seen that UV is excellent in the oxidative decomposition properties of the superabsorbent polymer and is less likely to modify the pulp fibers. Further, it can be seen that ozone is inferior to UV, but is excellent in the oxidative decomposition properties of the superabsorbent polymer and is likely to modify the pulp to some extent.

As described above, in a case where recycled pulp fibers are used in a pulp fiber application, increasing the ratio of UV between UV and the oxidizing agent (for example, ozone) makes it possible to form recycled pulp fibers having characteristics close to those of the original pulp fibers, and in a case where recycled pulp fibers are used in a processing application, increasing the ratio of the oxidizing agent between UV and the oxidizing agent (for example, ozone) makes it possible to form recycled pulp fibers having desired characteristics.

[Example 1]

A mixture of 3.0 g of pulp fibers (softwood pulp fibers) and 1.5 g of a superabsorbent polymer (AQUAKEEP (registered trademark), SA60S, manufactured by Sumitomo Seika Chemicals Co., Ltd.) was placed in a mesh bag (N-No. 250HD, 25 cm square, manufactured by NBC Meshtec Inc.), the mixture was immersed in 80 mL of physiological saline together with the mesh bag for 15 minutes, and the superabsorbent polymer (SAP) was caused to absorb the physiological saline. Next, the mixture was immersed in 700 mL of a sulfuric acid aqueous solution having a pH of 2.0, containing sulfuric acid as a dehydrating agent, for 15 minutes, to form mixture No. 2 in which the superabsorbent polymer was dehydrated.

It should be noted that the pulp fibers and the superabsorbent polymer placed in the mesh bag were dried at 120°C for 10 minutes.

Mixture No. 2 in the mesh bag, deionized water, and 10 mL of milk were mixed to form dispersed aqueous solution No. 4 (600 mL) of the pulp fibers and the superabsorbent polymer having a solid content concentration of 0.75 mass%. It should be noted that 10 mL of milk was added to simulate a situation where the dispersed aqueous solution becomes cloudy due to the presence of excrement or the like.

It should be noted that the transparency of dispersed aqueous solution No. 4 was 1.0.

The above-mentioned transparency was measured using an acrylic transparency meter AT series AT-1 manufactured by Kasahara Chemical Instruments Corp.

[Ozone Treatment]

Dispersed aqueous solution No. 4 (600 mL) of the pulp fibers and the superabsorbent polymer were put into a photochemical reactor (GT500, container capacity: 500 mL), manufactured by GLOBAL TOP CHEMICAL, in which a low pressure mercury lamp (UVL20PH-6, light emitting tube power: 0.05 W/cm$^2$, manufactured by SEN LIGHTS Co., Ltd.) was set, and the dispersed aqueous solution No. 4 was continuously stirred with a stirrer.

An ozone-containing gas (a gas other than ozone is dry air) adjusted so that the ozone concentration was 50 g/m$^3$ and the flow rate was 1 L/min was blown from an ozone generator (ozone gas exposure tester: ED-OWX-2, manufactured by EcoDesign, Inc.) to the photochemical reactor for 15 minutes to oxidatively decompose the superabsorbent polymer.

It should be noted that in the ozone treatment, ultraviolet rays were not emitted from the low pressure mercury lamp.

[UV Treatment]

From a low pressure mercury lamp, dispersed aqueous solution No. 4 (600 mL) was irradiated with ultraviolet ray for 15 minutes, and the superabsorbent polymer was oxidatively decomposed. It should be noted that in the UV treatment, no ozone-containing gas was blown from the ozone generator.

Subsequently, the contents of the photochemical reactor were filtered, and the residue was washed with deionized water to obtain recycled pulp fibers. The residual ratio of the superabsorbent polymer and the transparency of dispersed aqueous solution No. 4 after being exposed to the ultraviolet ray (transparency after treatment) are shown in Table 5. It should be noted that the residual ratio of the superabsorbent polymer was calculated as follows: the mass of the recycled pulp fibers was 3.0 g (the same as the mass of the pulp fibers).

It should be noted that, in Table 5, "SAP" denotes the superabsorbent polymer and "pulp" denotes the pulp fibers.

[Comparative Example 1]

Recycled pulp fibers were obtained in the same manner as in Example 1, except that the time of ozone treatment was set to be 30 minutes and UV treatment was not performed. The residual ratio of the superabsorbent polymer and the transparency after treatment are shown in Table 5.

[Comparative Example 2]

Recycled pulp fibers were obtained in the same manner as in Example 1, except that 10 mL of milk was not added to dispersed aqueous solution No. 4, the time of UV treatment was set to be 30 minutes, and ozone treatment was not performed. The residual ratio of the superabsorbent polymer and the transparency after treatment are shown in Table 5.

[Reference Example 12]

The same treatment was performed as in Example 1 except that 3.0 g of pulp fibers were not added, dispersed aqueous solution No. 5 (600 mL) of the superabsorbent polymer having a solid content concentration of 0.25 mass% was formed. The residual ratio of the superabsorbent polymer and the transparency after treatment are shown in Table 5.

[Reference Example 13]

The same treatment was performed as in Reference Example 12 except that ozone treatment and UV treatment were simultaneously performed for 30 minutes. The residual ratio of the superabsorbent polymer and the transparency after treatment are shown in Table 5.

[Reference Example 14]

The same treatment was performed as in Reference Example 12 except that 10 mL of milk was not added to dispersed aqueous solution No. 4, and ozone treatment and UV treatment were simultaneously performed for 30 minutes. The residual ratio of the superabsorbent polymer and the transparency after treatment are shown in Table 5.

[Reference Example 15]

The same treatment was performed as in Reference Example 12 except that ozone treatment was performed for 30 minutes and UV treatment was not performed. The residual ratio of the superabsorbent polymer and the transparency after treatment are shown in Table 5.

[Reference Example 16]

The same treatment was performed as in Reference Example 12 except that 10 mL of milk was not added to dispersed aqueous solution No. 4, ozone treatment was performed for 30 minutes, and UV treatment was not performed. The residual ratio of the superabsorbent polymer and the transparency after treatment are shown in Table 5.

[Reference Example 17]

The same treatment was performed as in Reference Example 12 except that UV treatment was performed for 30 minutes and ozone treatment was not performed. The residual ratio of the superabsorbent polymer and the transparency after treatment are shown in Table 5.

[Reference Example 18]

The same treatment was performed as in Reference Example 12 except that 10 mL of milk was not added to dispersed aqueous solution No. 4, UV treatment was performed for 30 minutes, and ozone treatment was not performed. The residual ratio of the superabsorbent polymer and the transparency after treatment are shown in Table 5.

[Table 5]

Table 5

| Example No. | Sample | Ozone UV/min | Clouding | Transparency after treatment | SAP residual ratio |
|---|---|---|---|---|---|
| Example 1 | SAP + Pulp | Ozone/15 + UV/15 | Presence | 1.2 | 14.2% |
| Comparative Example 1 | | Ozone/30 | Presence | 3 | 13.1% |
| Comparative Example 2 | | UV/30 | Absence | 30 < | 2.6% |
| Reference Example 12 | SAP | Ozone/15 + UV/15 | Presence | 2 | 10.9% |
| Reference Example 13 | | [UV + Ozone]/30 | Presence | 14 | 4.5% |
| Reference Example 14 | | [UV + Ozone]/30 | Absence | 30 < | 0.1% |
| Reference Example 15 | | Ozone/30 | Presence | 5 | 9.5% |
| Reference Example 16 | | Ozone/30 | Absence | 30 < | 3.2% |
| Reference Example 17 | | UV/30 | Presence | 1 | 68.4% |
| Reference Example 18 | | UV/30 | Absence | 30 < | 2.1% |

From comparison between Example 1 and Comparative Example 1, and comparison between Reference Example 12 and Reference Example 15, it is found that in a case where ozone treatment and UV treatment are used in combination, the SAP residual ratio is substantially equivalent to that in a case where only ozone treatment is used.
Further, it is clear from Reference Examples 9 to 11 that the long ozone treatment time changes the characteristics of the recycled pulp fibers, and thus found that the combined use of the ozone treatment and the UV treatment makes it possible to adjust the characteristics of the recycled pulp fibers.

**Claims**

1.  A method of producing recycled pulp fibers from a mixture including pulp fibers and a superabsorbent polymer and obtained from a sanitary product, the method comprising:

    a recycled pulp fiber forming step of forming the recycled pulp fibers by supplying an oxidizing agent and an ultraviolet ray to an aqueous solution containing the mixture to oxidatively decompose the superabsorbent polymer and dissolve the oxidatively decomposed superabsorbent polymer in the aqueous solution; and
    a recycled pulp fiber recovery step of recovering the recycled pulp fibers.

2.  The method according to claim 1, wherein the oxidizing agent is ozone.

3.  The method according to claim 1 or 2, wherein

    the recycled pulp fibers have predetermined characteristics according to an application, and
    in the recycled pulp fiber forming step, the recycled pulp fibers having the predetermined characteristics according to the application are formed by adjusting a ratio of the ultraviolet ray and the oxidizing agent and supplying the ultraviolet ray and the oxidizing agent to the aqueous solution.

4.  The method according to claim 3, wherein the application is a cellulose raw material application.

5.  The method according to claim 4, wherein the cellulose raw material application is selected from the group consisting of cellulose nanofibers, viscose rayon, a cellulose derivative, bioethanol, biobutanol, a molding material, and a processed paper product.

6.  The method according to any one of claims 3 to 5, wherein the recycled pulp fibers having the predetermined characteristics have an amount of carboxyl groups of 0 to 0.075 mmol/g.

7.  The method according to any one of claims 3 to 6, wherein the recycled pulp fibers having the predetermined characteristics have an increased amount of carboxyl groups of 0 to 0.035 mmol/g based on the pulp fibers.

8. The method according to any one of claims 3 to 7, wherein the recycled pulp fibers having the predetermined characteristics have a degree of polymerization of 300 or more.

9. The method according to any one of claims 3 to 8, wherein the recycled pulp fibers having the predetermined characteristics have a decreased amount in a degree of polymerization of 400 or less based on the pulp fibers.

10. The method according to any one of claims 3 to 9, wherein the recycled pulp fibers having the predetermined characteristics have an alkali dissolution rate of 0 to 20 mass%.

11. The method according to any one of claims 3 to 10, wherein the recycled pulp fibers have an increased amount in alkali solubility of 0 to 16 mass% based on the pulp fibers.

12. The method according to any one of claims 1 to 11, wherein in the recycled pulp fiber forming step, the oxidizing agent and the ultraviolet ray are supplied to the aqueous solution in an overlapping manner.

13. The method according to any one of claims 1 to 12, wherein in the recycled pulp fiber forming step, supply of the oxidizing agent to the aqueous solution is started, and then supply of the ultraviolet ray to the aqueous solution is started.

14. The method according to any one of claims 1 to 13, wherein in the recycled pulp fiber forming step, supply of the oxidizing agent to the aqueous solution is stopped, and then supply of the ultraviolet ray to the aqueous solution is stopped.

15. The method according to any one of claims 1 to 14, wherein in the recycled pulp fiber forming step, supply of the ultraviolet ray to the aqueous solution is started, and then supply of the oxidizing agent to the aqueous solution is started.

16. The method according to any one of claims 1 to 15, wherein the ultraviolet ray includes an ultraviolet ray having a wavelength of 380 nm or less.

<table>
<tr><td colspan="2"><b>INTERNATIONAL SEARCH REPORT</b></td><td>International application No.<br><br>**PCT/JP2023/004998**</td></tr>
</table>

**A. CLASSIFICATION OF SUBJECT MATTER**

*D21H 11/14*(2006.01)i; *B09B 3/70*(2022.01)i; *C08B 16/00*(2006.01)i; *C08J 11/16*(2006.01)i; *D21C 5/02*(2006.01)i
FI: D21H11/14; B09B3/70 ZAB; C08B16/00; C08J11/16; D21C5/02

According to International Patent Classification (IPC) or to both national classification and IPC

**B. FIELDS SEARCHED**

Minimum documentation searched (classification system followed by classification symbols)

D21H11/14; B09B3/70; C08B16/00; C08J11/16; D21C5/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2016/047294 A1 (UNICHARM CORP ) 31 March 2016 (2016-03-31)<br>claim 1 | 1-16 |
| A | US 2021/0053028 A1 (THE PROCTER & GAMBLE COMPANY) 25 February 2021 (2021-02-25)<br>claim 1 | 1-16 |
| A | WO 2019/087488 A1 (UNICHARM CORP ) 09 May 2019 (2019-05-09)<br>claims 1, 4, 6 | 1-16 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **24 April 2023** | **09 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<table>
<tr><td colspan="2" align="center">INTERNATIONAL SEARCH REPORT<br>Information on patent family members</td><td colspan="2">International application No.<br><br>**PCT/JP2023/004998**</td></tr>
</table>

| Patent document cited in search report | Publication date (day/month/year) | Patent family member(s) | Publication date (day/month/year) |
|---|---|---|---|
| WO 2016/047294 A1 | 31 March 2016 | US 2017/0284021 A1 claim 1<br>EP 3199254 A1<br>CN 106687228 A | |
| US 2021/0053028 A1 | 25 February 2021 | EP 3783054 A1 | |
| WO 2019/087488 A1 | 09 May 2019 | US 2020/0332467 A1 claims 1, 4, 6<br>EP 3680035 A1<br>CN 111278579 A<br>KR 10-2020-0076667 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014217835 A

**Non-patent literature cited in the description**

- Wood Science Experiment Manual. Buneido Publishing Co., Ltd., 2000